# EUROPEAN PATENT SPECIFICATION

(11) **EP 2 449 316 B1**
(45) Date of publication and mention of the grant of the patent: **14.05.2014**
(21) Application number: 10743224.7
(22) Date of filing: 02.07.2010
(51) Int. Cl.: F24F 13/02, B21D 5/14, F16L 9/02, F16L 9/17

(54) **A PROCESS FOR REALISING CHANNELLING MODULES FOR AIR DISTRIBUTION PLANTS, CHANNELLING MODULE, METHOD FOR PACKING SAID MODULES, AND METHOD OF ASSEMBLIYNG SAID MODULES.**
VERFAHREN ZUR HERSTELLUNG VON KANALISIERUNGSMODULEN FÜR LUFTVERTEILUNGSANLAGEN, KANALISIERUNGSMODUL, VERFAHREN ZUR VERKAPSELUNG DIESER MODULE UND VERFAHREN ZUR MONTAGE DIESER MODULE
PROCÉDÉ POUR RÉALISER DES MODULES DE CANALISATIONS D INSTALLATIONS DE DISTRIBUTION D AIR, MODULE DE CANALISATION, ET PROCÉDÉ D EMBALLAGE ET PROCÉDÉ D ASSEMBLAGE DESDITS MODULES

(30) Priority: 02.07.2009 IT MI20091174
(43) Date of publication of application: 09.05.2012
(73) Proprietor: Zambolin, Marco, 28010 Veruno (NO) (IT)
(72) Inventor: Zambolin, Marco, 28010 Veruno (NO) (IT)
(74) Representative: Ponzellini, Gianmarco
(86) International application number: PCT/IB2010/001658
(87) International publication number: WO 2011/001279

(56) References cited:
- EP-A2- 0 029 345
- DE-A1-102005 008 604
- US-A- 3 273 601
- US-A- 4 706 488

## Description

The invention relates to a process for realising channelling modules for air distribution and/or diffusion plants and a conduit obtained with the process.

In particular the present invention relates to a process for realising conduits preferably though not exclusively used for distribution of treated air for conditioning an environment, such as for example cooled air, hot air, filtered air or the like.

Air distribution plants usually comprise a channelling through which an appropriate amount of air is transferred from a devices destined to generate an air flow (for example a fan) to a zone of use, such as for example a particular environment such as a room, an office, a workshop, a large shed or the like. The channelling is usually made up of one or more metal-sheet conduits and one or more terminal diffusion ducts, such as perforated diffusion channels made of metal sheet or flexible metal.

Transport and diffusion conduits can be made of metal and have the task respectively of transporting and diffusing air homogeneously in the zone of use and, in the case of high-induction plants, the metal diffusion channels are provided with a plurality of diffusion holes arranged along a lateral wall of the conduit in order to inject air into the environment to be treated.

As is known, each conduit, which generally exhibits a substantially circular-section tubular conformation, is obtained by means of bending a flat sheet of metal sheet (see for example patent documents DE-102005008604-A and US-4706488-A). In particular the flat sheet, normally rectangular in plan (if necessary previously perforated) is made to pass through special calendering cylinders which bend and impart the arched circular shape on the metal sheet.

Subsequently respective longitudinal side edges are constrained to close the sheet, defining the tubular circular-section conformation of the conduit.

Generally the longitudinal edges are joined to one another by cramping and/or welding. In this situation, before the shaping stage the sheet is bent at the longitudinal edges in order to create respective projecting turnovers on opposite surfaces of the sheet. These turnovers, once the sheet has been fashioned, enable the sheet to be hooked up along what will become the lateral wall of the channelling module; the turnovers are then pressed to define a longitudinal superposing zone, and an unremovable engagement of the edges.

The conduit is preferably also welded at two end points of the longitudinal zone, such as to guarantee a stable constraint between the two longitudinal edges.

The circular opposite ends of the conduit are then bent outwards in order to define a pair of lateral abutments projecting radially from the metal sheet.

In other words, the circular edges defining the ends of the conduit are bent in order to emerge from the external cylindrical surface of the tubular sheet.

In this way, during the fitting of the plant, the conduits are coupled to one another by constraining the lateral abutments of two adjacent conduits.

This operation is generally done using special circular bands that surround the join zone of two consecutive conduits in order to fasten the lateral abutments of the conduits.

The above-described conduits and the relative realisation process, however, exhibit important drawbacks.

Firstly, it is known that air distribution plants can be particularly long and thus be made up of a very high number of tubular modules.

Consequently, numerous single modules have to be transported, and once coupled they define the channelling with the consequent disadvantages in terms of overall size and costs of the transport and in general the logistics. Moreover, note that each conduit, which defines an internal air passage channel, exhibits volumetric dimensions that are quite large and therefore the transport of the conduits is not only problematic but also particularly expensive given that generally costs of transport are calculated in terms of volume.

This drawback is also relevant in storage arrangements. The conduits cannot be finished in the worksite, so large numbers of them have to be pre-formed and stored, and also graded according to the various sizes and use destinations. Where it is possible, the most that can be done is that conduits of different diameters are inserted into one another in order to optimise space and transport costs.

Further, each module has to be specially packed and protected in order to prevent damage during transport.

In this context, the technical objective at the base of the present invention is to provide a process for realising channelling modules for air distribution plants and a respective module obtained by means of the method, which is able to obviate the drawbacks in the above-cited prior art.

In particular, the present invention aims to provide a conduit for air distribution and diffusion plants which is capable of limiting the overall sizes and also the costs of the respective operations of storage and transport.

An objective of the invention is to provide a simple and economical process for realising conduits for air distribution plants, and for the protection thereof during transport, as well for increasing the ease of installing the conduits.

The above-set technical objective and the set aims are substantially attained by a process for realising modules for air distribution plants, comprising the technical characteristics cited in one or more of the appended claims.

Further characteristics and advantages of the present invention will better emerge from the non-limiting description that follows of a preferred but not exclusive embodiment of a process for realising modules for air distribution plants, as illustrated in the accompanying figures of the drawings, in which:
figure 1 is a schematic view of a production plant of channelling modules of the invention;
figure 2 is a lateral view of a part of the plant of figure 1;
figure 3 is a perspective view of a first semi-finished workpiece for the following stages of realising a conduit for air distribution plants;
figure 4 is a lateral raised view of an upturned calender press for realising the conduit for air distribution plants;
figure 5 is a frontal raised view, with some parts removed better to illustrate others, of the conduit during the second stage of realisation of figure 4;
figure 6 is a perspective view of a conduit for air distribution plants according to the present invention;
figure 7 is a perspective view of a series of conduits of the type illustrated in figure 6, in a respective stage of partial stacking;
figure 7a is a transversal section of a plurality of modules inserted one into another for operations of storage and transport;
figure 8 is a perspective view of an air distribution plant made up of a series of conduits of the type illustrated in figure 6;
figures 9 and 9a are section views of two possible alternative constraint systems of successive modules;
figures 10a-10c are schematic representations of the stages of assembly of a channelling module.

With reference to the figures of the drawings, a channelling module for air distribution plants of the present invention has been denoted in its entirety by 1. The module 1 is obtained starting from a sheet 2 having a flat conformation and being preferably made of metal.

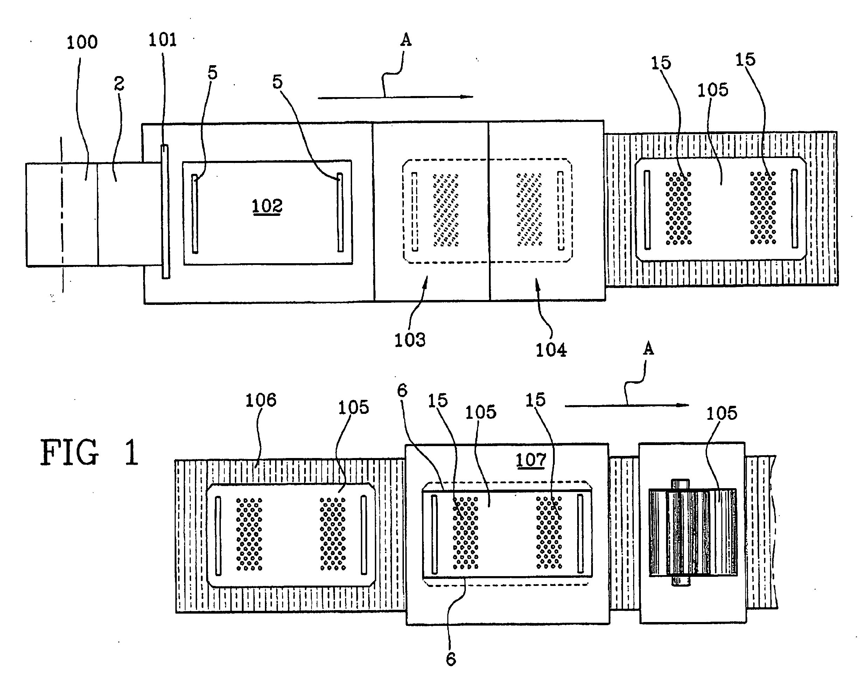

In particular, looking at figure 1, the plant for realising the open channelling module is curved with a circumference having a controlled deformation, in which a sheet is continuously unwound from a reel 100, flattened and then cut at a cutting station 101; in this way it is possible to establish a desired length of the single sheets which, due to how the production plant is designed, will consequently substantially define the dimension (length) of the circumference of the finished module.

Further, appropriate reference portion or portions 5 are defined at the station (or alternatively in preceding or subsequent stations), and are more fully described in terms of geometry and function herein below.

At this point the metal sheet 102 having a generally rectangular shape with transversal dimensions defined by the transversal dimensions of the reel 100 and longitudinal dimensions selected according to the dimensional needs of the channel to be realised is worked by an edging tool 103, i.e. a machine used in working of metal sheet and used for bevelling the edges of the metal sheet.

As well as being edged, the plant also includes a station 104 in which perforations 15 (if necessary) are made.

An important point is that if the module is destined to define a diffusion channel, it will exhibit perforations 15, made during the production process, as defined in the figures, at the lateral zones and along the transversal direction of the metal sheet such that in use the perforations enable air to be sent towards the environment external of the channel and the corresponding movement of the air of the external environment of the channel essentially by induction; to this end the perforations can be in numbers and of dimensions selected (generally not homogeneous in the perforation dimensions and the distribution of the perforations) in order to optimise the performance of the plant, moving the correct quantities of air, and in any case avoiding, during use, the creation of unpleasant draughts at ground level; if on the other hand the module is destined to define an air transport channel the perforations will usually not be present. Note that the perforations 15 realised in the metal sheet, which will define diffusing channels, are configured such that once several diffusion modules are coupled to one another, the perforations define two tracts arranged on the channel surface which develop in the longitudinal development direction of the channel. Note however than diffusion channels (perforated) and transport channels (not perforated) can be alternated or in any case arranged in any sequence according to the particular design.

In this way at the end of the first working stage of the product a flat sheet is obtained having reference portions, appropriately perforated and edged and of the desired dimensions for realising the channelling module of the invention.

In this situation a plurality of sheets 105 are stacked on one another and arranged on appropriate platforms 106 (one or more platforms 106 will be available in series according to loading/stacking requirements).

In particular the raising platforms 106 will be provided with special movement means (such as a bridge crane, a roller plane and others besides) in order to advance the sheets 105 towards the subsequent work stations along the advancement direction A (figure 1).

In this situation a loader (not illustrated inasmuch as of known type and conventional) will be able to pick up the metal sheets 105 one-by-one in order to send them towards a shaping station 107.

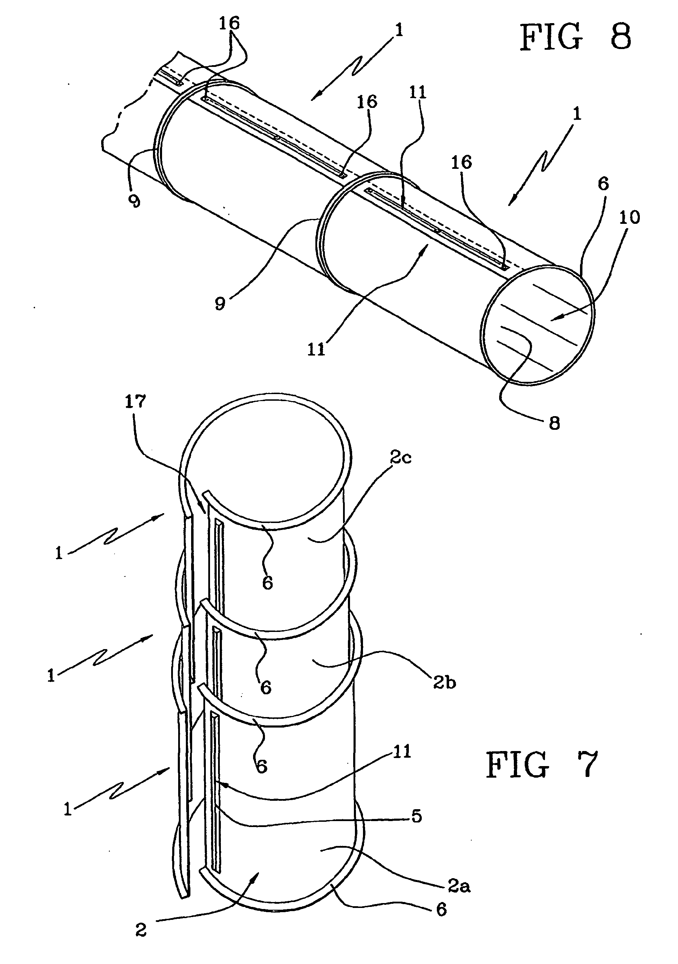

The metal sheet 105 is deformed in the shaping station 107 such that the sheet 105 on exit exhibits two lateral abutments 6 which in the end product will define end edges radially emerging in order to enable constraint of successive modules and to define the conditioning plant (see figure 8).

The deformation is realised by bending, such that the lateral edges 6 emerge (for example at right angles) from the lie plane of the sheet. In the accompanying figures of the drawings these edges are illustrated as being continuous and extending substantially along the whole longitudinal development of the metal sheet 105, on both sides; however it is possible, though more complex and less reliable, for the edges 6 to extend only over a portion of the whole longitudinal development (for example only in a central zone) or for two or more edges 6 to be present on at least one and in general on each opposite side of the metal sheet 105. In this case, a part of the metal sheet could be appropriately cut (before bending), which part would define the edges such as to create empty zones alternating with full zones at the lateral portions. Obviously only the full zones would define the lateral edges after deformation.

Obviously the operation of realising the previously-described reference portions 5 can also be performed at further work stations, for example in the shaping station, without forsaking the aim of the present invention.

It is specified, as previously mentioned, that the metal sheet 2 can be further perforated in order to define a series of air diffusion passages 15. However, for the sake of greater clarity, figures from 3 to 10 illustrate metal sheets 2 not exhibiting perforations, used only for air transport (the object of the invention comprises both embodiments and it is therefore understood that the operations described and actuated in relation to the non-perforated sheet are equally applicable to the sheet with perforations 15).

The metal sheet 2 exhibits means for constraining 11 the opposite longitudinal edges 4 comprising at least the cited reference portion 5.

In particular, each longitudinal edge 4 illustrated exhibits a single reference portion 5 constituted by a recessed zone having for example a trapezoid section (obviously straight or partly curved sections are also comprised within the ambit of protection of the invention); each recessed zone of the reference portion 5 is complementarily shaped to the corresponding recessed zone in the other longitudinal edge 4 such that during coupling of the opposite longitudinal edges of each module, the reference portions couple to one another and guarantee excellent assembly. For this purpose it is clear that although each recessed zone illustrated runs parallel to the edge of the metal sheet, it is possible that the might not be parallel to the edge as long as once engaged to one another the module is in a completed-channel configuration, ready for definitive blocking, and the longitudinal edges can thus be rigidly fixed to one another.

The reference portions 5 are normally realised in a drawing stage performed by means of a press which is not illustrated as it is of known type.

In this way a series of recessed zones 5a is defined in a first surface 2a of the metal sheet 2, opposite respective projecting zones 5b extending from a second surface 2b opposite the first surface 2a.

Note that, especially with large-diameter channels (∼1500 mm), for each side two or more of the reference portions 5 can be used.

Further, the means for constraining the module comprise a predetermined number of perforations 16, made in the projecting zones 5b and the recessed zones 5a.

As will more fully emerge herein below, the perforations 16 enable passage of respective coupling organs such as screws or rivets or the like.

It is clear that reference portions 5 can be made having completely different geometries and shapes from those illustrated herein, and will in any case enable the further operations described herein below to be described.

Purely by way of example, for each longitudinal edge 4 a plurality of single deformations can be realised (bumps), arranged substantially along the whole longitudinal edge 4 (or even only at some parts of the edge 4 such as the end portions).

In a further embodiment, not illustrated, the reference portions 5 can be constituted by terminal projecting lips along the transversal development of the metal sheet and at the free transversal edges (longitudinal edges 4) such as to be able to define reciprocal coupling portions which guarantee correct positioning of the module before mounting thereof, as will be more clearly described herein below.

In an extremely simplified embodiment simple reference marks present on a longitudinal edge and the other longitudinal edge could be used as reference portions 5; these marks will, for example, be superposed to indicate that the correct reciprocal positioning of the edges has been attained before constraint is made final (in this sense the reference portions can be, or not, the through-holes 16 for locking.

However making only reference marks is in general not sufficient as this method does not provide any help in maintaining the reciprocal positioning; on the other hand, the reference portion 5 defined, for example, by (small) deformations of the opposite edges of the metal sheet help (at least partially) in maintaining the reciprocal position and facilitate final assembly of the module.

Expressed in another way, the reference portions 5 define reciprocal coupling surfaces of the opposite longitudinal edges 4 to be exploited during assembly of the module (closure along the longitudinal axis of the module in order to define a tubular channel open only at ends thereof).

Still further embodiments are possible.

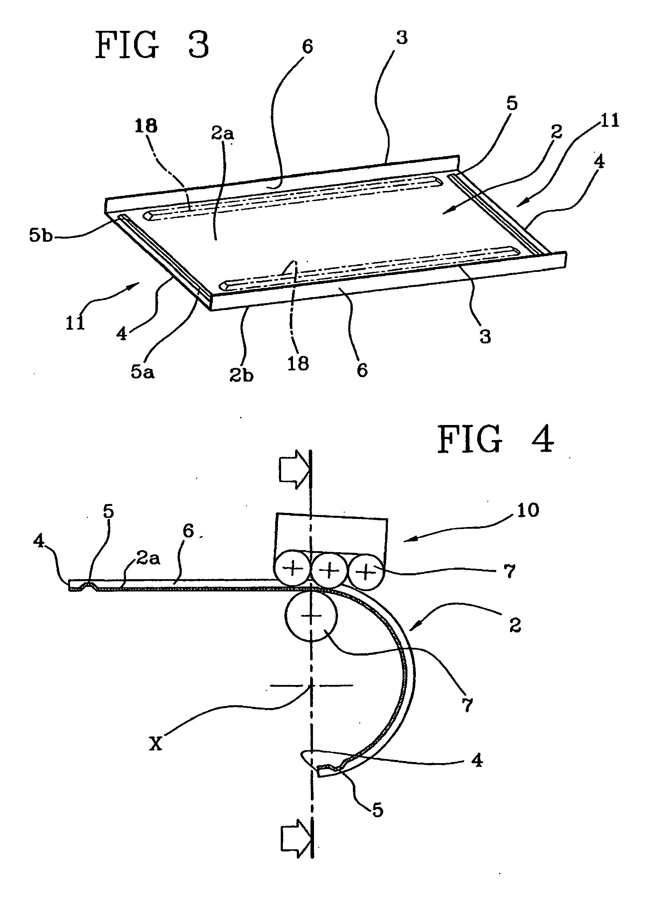

Still with reference to figure 3, note that the metal sheet 2 further exhibits two lateral abutments 6 realised at the respective transversal edges 3.

Each lateral abutment 6 is advantageously defined by a bending stage performed on the transversal edge 3 above the first surface 2a of the sheet 2. The lateral abutments 6 are preferably brought up to each other and extend perpendicular to the planar development of the metal sheet 2. In this case too, the bending stage of the transversal edges 3 for defining the abutments 6 is performed by a press, not illustrated in detail as of known type.

The metal sheet 2 can further comprise one or more longitudinal reinforcements 18 (for example having a semicircular section) that are substantially parallel to the edges 3 (and the abutments 6 if present) located between the reference portions 5.

The reinforcements 18 (optional) have the aim of guaranteeing a sufficient structural rigidity of the module, in particular if destined to realise large-diameter channels.

The above-described flat sheet 2 is then bent (curved) to near the longitudinal edges 4 to one another, defining a substantially tubular shape for the metal sheet 2.

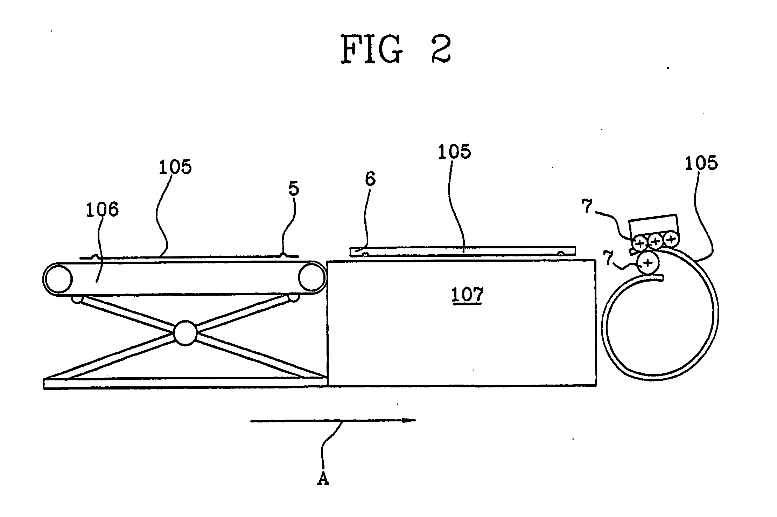

In more detail, as is better illustrated in figures 2, 4 and 5, the flat sheet 2 is passed through a series of shaping cylinders 7 destined to form the metal sheet 2 into a substantially tubular shape.

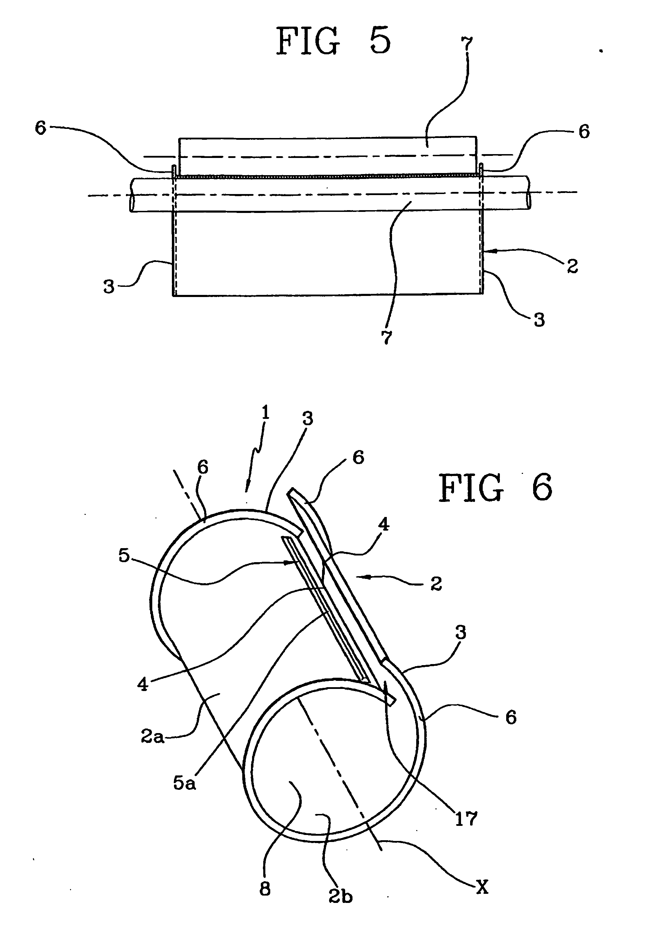

With particular reference to figure 6, the metal sheet is bent with the respective convex first surface 2a facing upwards and the concave second surface 2b facing downwards such that the abutments 6 take on a curved shape.

Also, during the shaping stage, the metal sheet 2 is folded progressively, by nearing the respective longitudinal edges 4 to one another and defining a substantially spiral conformation of the sheet 2. The tubular shape of the sheet 2 exhibits a spiral transversal section development, i.e. a respective open zone 17 defined by the distance between the longitudinal edges 4. In this situation, the longitudinal edges 4 are arranged at different distances (d; d') from a longitudinal development central axis X of the metal sheet 2.

In other words, the degree of curvature defined at the most internal longitudinal edge will be less than the degree of curvature defined at the radially more external longitudinal edge; in optimal conditions the degree of curvature will increase following the circumference of the open and curved module starting from the internal edge up to arriving at the radially more external longitudinal edge.

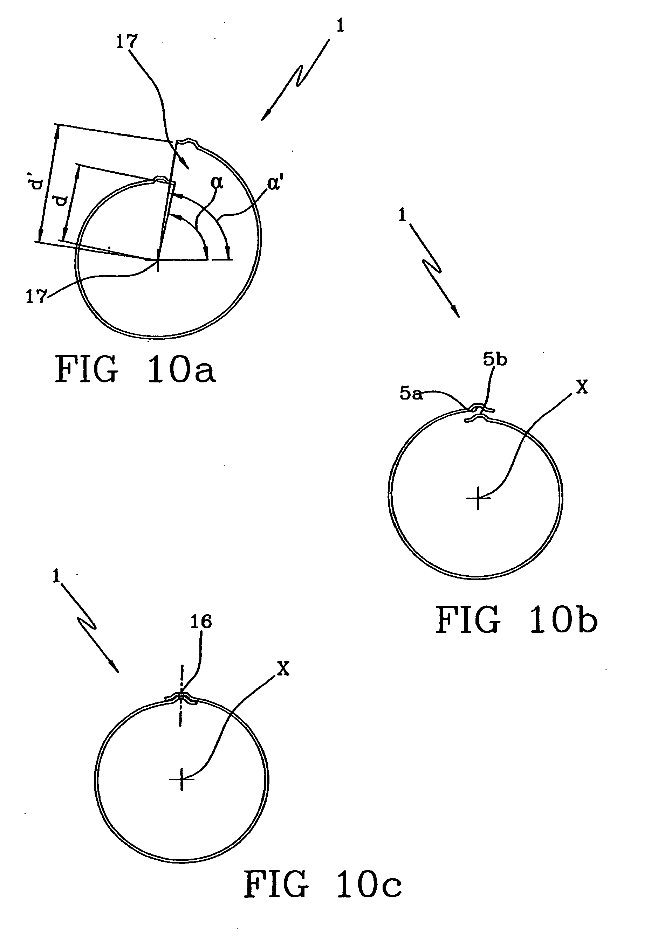

Obviously the fact of having left the module open (zone 17) and having shaped it in a spiral also leads to an angular staggering (α; α') of the edges 4 (figure 10) with respect to the assembly condition of the edges themselves (figure 10c).

In other terms, the metal sheet which will define the channelling module is appropriately deformed such as to take on, in section, a spiral shape, or a spiral having a circumference with a precisely controlled deformation.

In still other terms, apart from being arranged at different distances from the longitudinal development axis X of the metal sheet, the longitudinal edges 4 are also angularly staggered with respect to the axis X.

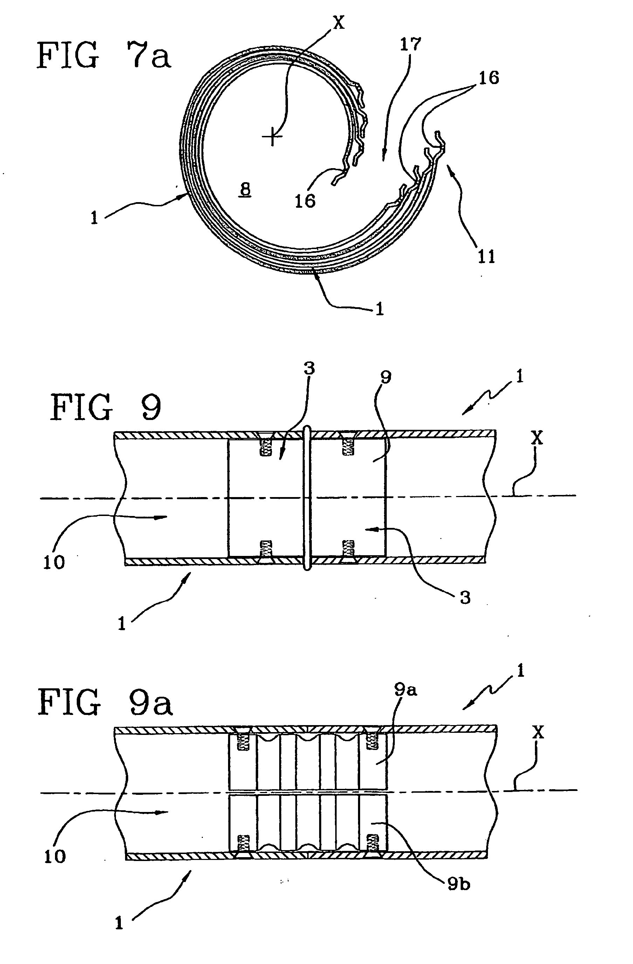

The opening 17 defined on each module enables other similarly-produced modules to be housed internally of a thus-realised module, by exploiting the elasticity of the metal material and the elasticity guaranteed by the open configuration (see figure 7a).

As is better illustrated in figure 5, during the shaping stage the abutments 6 of the metal sheet 2 are arranged externally of the rollers 7. In this way, the action of the rollers 7 is performed directly on the first and the second surface 2a, 2b, while the abutments 6 are maintained at the ends of a respective roller 7, such as to guide the metal sheet 2 along the shaping direction.

The thus-obtained metal sheet 2 (figure 6) defines an internal channel 8 (opening longitudinally due to the spiral section) which in the operating condition of the conduit 1, i.e. when the module is finished), enables passage of air.

For example the maximum diameters of a finished channelling module will be around 1600-1700 mm.

With particular reference to figure 7a, a transport and storage condition of a series of modules 1 is illustrated, with the modules 1 telescopically associated to one another.

In greater detail, and still with reference to figure 7a, the internal channel 8 of the more external metal sheet 2 contains a further metal sheet 2b, 2c, also spiral-shaped.

Purely by way of example, modules having a final diameter of 250 mm can be packed in twos, threes or fours; with final diameters of between 500 and 800 mm about ten modules can be packed, while diameters of 1600 mm enable from 30 to 50 modules can be packed.

The longitudinal edges 4 of the most external sheet 2a can advantageously be distance from the longitudinal development axis X in order to increase the size of the internal channel 8 such as to enable further metal sheets to be contained.

The realisation of each spiral-shaped module enables the channelling module to retain a certain degree of deformation elasticity and thus enables coupling by insertion of a plurality of modules, which thus optimally occupy the first module's space, which situation would be impossible in a case in which the channelling module were already completely assembled to define a substantially undeformable circular section (figure 7a).

The metal sheets thus-associated are stored or transported up to the installation place, where the respective air distribution plant 10 partially illustrated in figure 8 is to be installed.

At the work-place, the metal sheets 2a, 2b, 2c are extracted from one another (generally while keeping the pack of metal sheet with its axis vertical, as in figure 7) and deformed in order to return to a respective functioning condition. The functioning condition is defined simply by joining the opposite longitudinal edges 4 of each spiral-shaped metal sheet 2, in order to give the sheets 2 themselves a circular and closed transversal development (figures 10a - 10c).

In other words, the longitudinal edges 4 defining the open zone 17 of the sheet 2 are anchored to one another in order to close the metal sheet 2 and define a tubular structure which tends to return to a circular section.

In particular, a longitudinal edge 4 is superposed on the opposite longitudinal edge 4, such as to place the first surface 2a partially in contact with the second surface 2b. In this way, the projecting portions 5b of the superposed edge 4 are inserted in the respective recessed portions 5a of the superposed longitudinal edge 4 (or vice versa) (figure 10b).

Further, locking screws (not illustrated as of known type) can be inserted in the perforations afforded in the reference portions 5 (or even in proximity thereof), which screws fasten the edges 4 to one another.

In other words, the reference portions 5 enable guiding, during laying, the opposite longitudinal edges up to reaching the correct fastening position; in this fastening position, respective holes present in the opposite longitudinal edges are superposed and are in a suitable condition for being fastened by screws, rivets or similar constraint elements.

In this condition, the conduits 1 are brought up to one another and constrained at the respective transversal edges 3, in order to define a succession of conduits I defining the plant 10.

In particular, the abutments 6 of two adjacent conduits 1 are brought side-to-side and anchored using a respective band 9, not illustrated or described as of known type.

The band 9 exhibits a substantially annular conformation in order to extend about the conduits 1, at a joining zone of the conduits 1. The band 9 further exhibits respective hooking organs for keeping the abutments 6 anchored to one another and also for keeping the internal channels 8 of the adjacent conduits in fluid communication.

It is obvious that the fastening achieved with the band leads to a generation of forces, not only locking forces, but also destined to return the channelling module to its circular shape should it have partly lost its correct geometry following excessive deformation thereof.

Alternatively, engaging elements 9 can be used which are different and destined to be inserted in the conduits 1. The elements, schematically illustrated in figures 9 and 9a, do not require constraining to the abutments 6 (which might even be omitted) and are constrained to the transversal edges 3, at the joining zone between two conduits 1.

The example of figure 9 shows an internal element 9 provided with a central reinforcing rib facing towards the outside of the channel; figure 9a, on the other hand, illustrates the use of two semi-elements 9a-9b provided with three reinforcing ribs facing towards the inside of the channel such as to guarantee both an optimal structural reinforcement and an absence of discontinuity seen from outside the channel.

Note that the above-described conduits 1 can be stored and transported while considerably reducing the overall volumes thereof.

The advantage is provided by the module 1 realisation process, which comprises a stage of obtaining a semi-finished work-piece constituted by the metal sheet 2 having an open-arch configuration, in general having a spiral structure. The metal sheet 2 enables containing further sheets 2, again spiral-shaped with a circumference having a controlled deformation such as to exploit the space defined by the internal channel 8 for containing a predetermined number of metal sheets 2.

Consequently the volumetric dimensions caused by the presence of numerous modules 1 are considerably reduced; the modules 1 are definitively formed, i.e. closed in the tubular conformation, only during the installation thereof.

By its very nature the stacking as realised protects the internal sheets from eventual damage due to impacts and enables considerable time-saving and packaging costs.

Note also that the procedure is particularly simple and rapid in the installation operations, given the structure of the metal sheet 2 itself.

In particular, the presence of the reference portions 5 guarantees and immediate and simple assembly and also a stable constraint between the longitudinal edges 4. Also, the formation of the abutments 6 previous to the forming stage (in the flat condition of the metal sheet 2) is particularly simple and easy.

Further, the use of removable constraining means 11 enables access at all times to the inside of the channelling which therefore also becomes suitable for housing electric cables, piping, further conduits such as those for compressed air, etc.

## Claims

1. A process for manufacturing duct modules for air distribution and/or diffusion systems, comprising steps of:
- predisposing a metal sheet (2) having a substantially flat development;
- creating constraining means (11) at least at respective longitudinal opposite edges (4) of the metal sheet (2), said longitudinal edges being designed to be coupled under use conditions of the module; and
- bending said metal sheet (2) in order to move the longitudinal edges (4) towards each other such as to define a substantially tubular shape of the metal sheet (2);
**characterised in that** on completion of the bending step of the metal sheet (2), the metal sheet (2) has a substantially spiral conformation, with the respective longitudinal edges (4) being disposed at different distances from a longitudinal development axis (X) of the bent metal sheet (2).

2. A process as claimed in the preceding claim, wherein the constraining means (11) comprise a predetermined number of perforations (16) at a longitudinal edge (4), and corresponding perforations on the opposite longitudinal edge, the perforations being destined to be reciprocally superposed in a fastening position of the module.

3. A process as claimed in claim 1 or 2, **characterised in that** the step of bending the metal sheet (2) is carried out by calendering the metal sheet (2) itself; said metal sheet (2), following the calendering step, having a substantially open-arched conformation with a spiral-like development in section and optionally with longitudinal edges (4) offset from each other with respect to the longitudinal axis (X).

4. A process as claimed in claim 1 or 2 or 3, further comprising, optionally preceding the step of bending the metal sheet (2), a step of realising at least one and in particular two lateral abutments (6) at respective transversal edges (3) to the longitudinal edges (4).

5. A process as claimed in claim 4, wherein said lateral abutments (6) emerge in particular in a radially distancing direction from the longitudinal development axis in use conditions of the module, in particular said step of realising the two lateral abutments (6) comprising a sub-step of bending each transversal edge (3) perpendicular to a planar extension of said metal sheet (2).

6. A process as claimed in any one of the preceding claims, **characterised in that** the step of predisposing the metal sheet (2) is performed by flattening out a continuous metal sheet (2) unwound from a reel and cutting the sheet (2) such as to obtain a metal sheet (2) having a substantially quadrangular plan extension with two longitudinal edges (4) and two transversal edges (3).

7. A process as claimed in any one of the preceding claims, **characterised in that** said step of creating constraining means comprises the step of realising at least a reference portion (5) performed at each longitudinal edge (4), the reference portions (5) enabling, during a constraining step of the longitudinal edges (4) to one another, defining a correct reciprocal positioning and at least partly enabling the position to be maintained.

8. A process as claimed in claim 7, **characterised in that** said step of realising at least a reference portion (5) comprises sub-steps of: defining at least a recessed region (5a) in a first surface (2a) of the metal sheet (2) and simultaneously defining a projecting region (5b) on a second surface (2b) of the metal sheet (2) opposite the first surface (2a), said projecting region (5b) being insertable into said recessed region (5a) of the reference portion on the opposite edge (4).

9. A process as claimed in any one of claim 7 to 8, **characterised in that** said step of creating constraining means (11) comprises a sub-step of defining at least a perforation (16) at or close to each reference portion (5), the perforation (16) being superposed on a corresponding perforation (16) of the opposite longitudinal edge when the module is in the constrained condition.

10. A process as claimed in any one of the preceding claims, **characterised in that** it further comprises the step of inserting at least one further spiral-conformed metal sheet (2) into an inner channel (8) of a spiral-conformed metal sheet (2), such as to define a condition of transport and storage of a plurality of modules (1).

11. A process as claimed in any one of claims, 7 to 9, **characterised in that** it further comprises a step of implementing the module (1) having sub-steps of:
- nearing the longitudinal edges (4) to each other such as to bring the respective reference portions (5) into corresponding positions;
- constraining the longitudinal edges (4) to each other; and
- optionally constraining an end of the module to a next end of an adjacent module such as to define a stretch of channelling; the steps of constraining the lateral edges (4) and/or constraining the ends helping to return the module into a substantially circular tubular configuration.

12. A duct module for air distribution and/or diffusion systems comprising a metal sheet (2) having a substantially rectangular plan extension, **characterised in that** said metal sheet (2), in a non-operating condition thereof, has an open tubular conformation, and in cross-section to the module axis exhibits a spiral development in order to define respective longitudinal opposite edges (4) comprising constraining means (11) and arranged at different distances from a longitudinal development axis (X) of the metal sheet (2), the module having a longitudinal access (17) in a direction of the inner channel (8), the module in particular further comprising at least one and optionally two lateral abutments (6) extending from respective edges (3) that are transversal to said longitudinal opposite edges (4), said abutments (6) radially emerging in a distancing direction from the development axis (X).

13. A method of packing modules as claimed in claim 12, **characterised in that** said spiral-like metal sheet (2) has an internal channel (8) for housing at least an additional open spiral-like tubular metal sheet (8); said longitudinal opposite edges (4) of the metal sheet being moved apart from each other to enable insertion/removal of the at least one additional metal sheet (2).

14. A method of implementing a conduit as described in claim 12, **characterised in that** it comprises steps of:
- joining the respective longitudinal opposite edges (4) of each metal sheet (2) of a plurality of metal sheets destined to define a channelling in which the metal sheets (2) exhibit a substantially closed and circular transverse development;
- moving the metal sheets (2), in the closed tubular configuration, in succession close to each other in order to define a channelling of an air distributing system (1); and
- constraining the transversal edge (3) of each metal sheet (2) to the transversal edge (3) of the adjacent metal sheet (2).

## Patentansprüche

1. Verfahren zur Herstellung von Schachtmodulen für Luftverteilungs- und/oder Diffusionssysteme, umfassend die Schritte:
- anordnen eines Blechs (2), das eine im Wesentlichen flache Ausbildung aufweist;
- Erzeugen von Belegungsmitteln (11) mindestens an jeweils gegenüberliegenden Längskanten (4) des Blechs (2), wobei die Längskanten entworfen sind, um im Verwendungszustand des Moduls gekoppelt zu werden; und
- Biegen des Blechs (2), um die Längskanten (4) auf einander zu zu bewegen, um eine im Wesentlichen röhrenförmige Form des Blechs (2) zu definieren;
**dadurch gekennzeichnet, dass** beim Vollenden des Biegeschrittes des Blechs (2) das Blech (2) eine im Wesentlichen spiralförmige Gestalt aufweist, wobei die jeweiligen Längskanten (4) in unterschiedlichen Entfernungen von einer Längsentwicklungsachse (X) des gebogenen Blechs (2) angeordnet sind.

2. Verfahren nach dem vorhergehenden Anspruch, wobei die Belegungsmittel (11) eine vorbestimmte Anzahl an Perforationen (16) an einer Längskante (4) umfassen, und entsprechende Perforationen auf der gegenüberliegenden Längskante, wobei die Perforationen dazu bestimmt sind, um gegenseitig in einer Befestigungsposition des Moduls in Überlagerung gebracht zu werden.

3. Verfahren nach Anspruch 1 oder 2, **dadurch gekennzeichnet, dass** der Schritt des Biegens des Blechs (2) durch Kalandrieren des Blechs (2) selbst durchgeführt wird; wobei das Blech (2), nach dem Schritt des Kalandrierens, eine im Wesentlichen aufgewölbte Gestalt mit einer spiralähnlichen Entwicklung im Querschnitt, und optional mit den Längskanten (4) voneinander in Bezug auf die Längsachse (X) versetzt, aufweist.

4. Verfahren nach Anspruch 1 oder 2 oder 3, weiter umfassend, optional dem Schritt des Biegens des Blechs (2) vorausgehend, einen Schritt des Erstellens mindestens eines und insbesondere von zwei Queranschlägen (6) an jeweils zu den Längskanten transversalen Kanten (3).

5. Verfahren nach Anspruch 4, wobei die Queranschläge (6) insbesondere in einer sich radial entfernenden Richtung von der Längsentwicklungsachse im Verwendungszustand des Moduls hervortreten, wobei insbesondere der Schritt des Erstellens der zwei Queranschläge (6) einen Unterschritt des Biegens jeder transversalen Kante (3) rechtwinklig zu einer planaren Ausdehnung des Blechs umfasst.

6. Verfahren nach einem der vorhergehenden Ansprüche, **dadurch gekennzeichnet, dass** der Schritt des Anordnens des Blechs (2) durch Abflachen eines durchgängigen Blechs (2) durchgeführt wird, das von einer Rolle abgewickelt wird, und Schneiden des Bogens (2), um ein Blech (2) zu erhalten, das eine im Wesentlichen viereckige, plane Ausdehnung mit zwei Längskanten (4) und zwei transversalen Kanten (3) aufweist.

7. Verfahren nach einem der vorhergehenden Ansprüche, **dadurch gekennzeichnet, dass** der Schritt des Erzeugens von Belegungsmitteln den Schritt des Erstellens mindestens eines Referenzabschnitts (5), durchgeführt an jeder Längskante (4), umfasst, wobei die Referenzabschnitte (5) ermöglichen, während eines Belegungsschrittes der Längskanten (4) zueinander, eine korrekte gegenseitige Positionierung zu definieren und mindestens teilweise ermöglichen, die Position beizubehalten.

8. Verfahren nach Anspruch 7, **dadurch gekennzeichnet, dass** der Schritt des Erstellens mindestens eines Referenzabschnitts (5) die Unterschritte umfasst: Definieren mindestens eines eingelassenen Bereichs (5a) in einer ersten Oberfläche (2a) des Blechs (2) und gleichzeitig Definieren eines herausragenden Bereichs (5b) auf einer zweiten Oberfläche (2b) des Blechs (2) gegenüber der ersten Oberfläche (2a), wobei der herausragende Bereich (5b) in den eingelassenen Bereich (5a) des Referenzabschnitts auf der gegenüberliegenden Kante (4) einsetzbar ist.

9. Verfahren nach einem der Ansprüche 7 bis 8, **dadurch gekennzeichnet, dass** der Schritt des Erzeugens von Belegungsmitteln (11) einen Unterschritt von Definieren mindestens einer Perforation (16) umfasst, an oder nahe bei jedem Referenzabschnitt (5), wobei die Perforation (16) eine entsprechende Perforation (16) der gegenüberliegenden Längskante überlagert, wenn das Modul im belegten Zustand ist.

10. Verfahren nach einem der vorhergehenden Ansprüche, **dadurch gekennzeichnet, dass** es weiter den Schritt des Einsetzens mindestens eines weiteren spiralförmigen Blechs (2) in einen inneren Kanal (8) eines spiralförmigen Blechs (2) umfasst, um einen Transport- und Lagerungszustand einer Mehrzahl von Modulen (1) zu definieren.

11. Verfahren nach einem der Ansprüche 7 bis 9, **dadurch gekennzeichnet, dass** es weiter einen Schritt des Implementieren des Moduls umfasst, aufweisend die Unterschritte:
- Annähern der Längskanten (4) aneinander, um die jeweiligen Referenzabschnitte (5) in entsprechende Positionen zu bringen;
- Belegen der Längskanten (4) aneinander; und
- optional Belegen eines Endes des Moduls an ein nächstes Ende eines angrenzenden Moduls, um eine Ausdehnung eines Kanals zu definieren; wobei die Schritte des Belegens der Querkanten (4) und/oder Belegen der Enden helfen, das Modul in eine im Wesentlichen zirkuläre röhrenförmige Konfiguration zurückzuführen.

12. Schachtmodul für Luftverteilungs- und/oder Diffusionssysteme, umfassend ein Blech (2), das eine im Wesentlichen rechtwinklige plane Ausdehnung aufweist, **dadurch gekennzeichnet, dass** das Blech (2) in einem Nichtbetriebszustand dessen eine offene röhrenförmige Gestalt aufweist und im Querschnitt zur Modulachse eine Spiralentwicklung zeigt, um jeweils gegenüberliegende Längskanten (4) umfassend Belegungsmittel (11) und angeordnet in unterschiedlichen Entfernungen von einer Längsentwicklungsachse (X) des Blechs (2) zu definieren, wobei das Modul einen Längszugang (17) in einer Richtung des inneren Kanals (8) aufweist, wobei das Modul insbesondere weiter mindestens einen und optional zwei Queranschläge (6) umfasst, die sich von jeweiligen Kanten (3) erstrecken, die transversal zu den gegenüberliegenden Längskanten (4) sind, wobei die Anschläge (6) in einer sich radial entfernenden Richtung von der Längsentwicklungsachse des Moduls hervortreten.

13. Verfahren zum Packen von Modulen nach Anspruch 12, **dadurch gekennzeichnet, dass** das spiralförmige Blech (2) einen inneren Kanal (8) zur Aufnahme mindestens eines zusätzlichen offenen spiralförmigen Blechs (2) aufweist; wobei die gegenüberliegenden Längskanten (4) des Blechs von einander wegbewegt werden, um das Einsetzen/Entfernen des mindestens einen zusätzlichen Blechs (2) zu ermöglichen.

14. Verfahren zum Implementieren eines Leitungskanals wie beschrieben in Anspruch 12, **dadurch gekennzeichnet, dass** es die Schritte umfasst:
- Zusammenfügen der jeweiligen gegenüberliegenden Längskanten (4) eines jeden Blechs (2) einer Mehrzahl von Blechen, die dazu bestimmt sind, einen Kanal zu definieren, in dem die Bleche (2) eine im Wesentlichen geschlossene und zirkuläre transversale Entwicklung zeigen;
- Bewegen der Bleche (2) in die geschlossene röhrenförmige Konfiguration, in Nachfolge nah an einander, um einen Kanal eines Luftverteilungssystems (1) zu definieren; und
- Belegen der transversalen Kante (3) eines jeden Blechs (2) an die transversale Kante (3) des angrenzenden Blechs (2).

## Revendications

1. Procédé pour fabriquer des modules de conduits pour des systèmes de distribution et/ou de diffusion de l'air, comprenant les étapes de:
- préparer une feuille de métal (2) ayant un développement substantiellement plat;
- créer des moyens d'engagement (11) au moins à des bords longitudinaux opposés respectifs (4) de la feuille de métal (2), lesdits bords longitudinaux étant aptes à être accouplés dans des conditions d'emploi du module; et
- plier ladite feuille de métal (2) afin de déplacer les bords longitudinaux (4) l'un vers l'autre pour définir une forme substantiellement tubulaire de la feuille de métal (2);
**caractérisé en ce que** à la fin de l'étape de pliage de la feuille de métal (2), la feuille de métal (2) a une forme substantiellement en spirale, les bords longitudinaux respectifs (4) étant rangés à des distances différentes d'un axe de développement longitudinal (X) de la feuille de métal pliée (2).

2. Procédé selon la revendication précédente, où les moyens d'engagement (11) comprennent un nombre préétabli de trous (16) sur un bord longitudinal (4), et des trous correspondants sur le bord longitudinal opposé, les trous étant aptes à se superposer réciproquement dans une position de fixation du module.

3. Procédé selon la revendication 1 ou 2, **caractérisé en ce que** l'étape de pliage de la feuille de métal (2) est réalisée par calandrage de la feuille de métal (2) même; ladite feuille de métal (2) après l'étape de calandrage ayant une forme substantiellement en arc ouvert avec, en section, un développement en spirale et optionnellement avec les bords longitudinaux (4) décalés l'un de l'autre par rapport à l'axe longitudinal (X).

4. Procédé selon la revendication 1 ou 2 ou 3, comprenant en outre, optionnellement avant l'étape de pliage de la feuille de métal (2), une étape de réalisation d'au moins une et en particulier deux butées latérales (6) sur des bords respectifs (3) transversaux aux bords longitudinaux (4).

5. Procédé selon la revendication 4, où lesdites butées latérales (6) saillissent en particulier dans une direction d'espacement radial par rapport à l'axe de développement longitudinal dans des conditions d'emploi du module, en particulier ladite étape de réalisation des deux butées latérales (6) comprenant une sous-étape de pliage de chaque bord transversal (3) perpendiculairement à une extension planaire de ladite feuille de métal (2).

6. Procédé selon une quelconque des revendications précédentes, **caractérisé en ce que** l'étape de préparation de la feuille de métal (2) est réalisée par aplatissement d'une feuille de métal continue (2) déroulée d'une bobine et par coupage de la feuille (2) de sorte à obtenir une feuille de métal (2) ayant une extension planaire substantiellement quadrangulaire avec deux bords longitudinaux (4) et deux bords transversaux (3).

7. Procédé selon une quelconque des revendications précédentes, **caractérisé en ce que** ladite étape de création des moyens d'engagement comprend l'étape de réalisation d'au moins une portion de référence (5) exécutée sur chaque bord longitudinal (4), les portions de référence (5) permettant, pendant une étape d'engagement des bords longitudinaux (4) l'un avec l'autre, la définition d'un positionnement réciproque correcte et permettant au moins partiellement de maintenir la position.

8. Procédé selon la revendication 7, **caractérisé en ce que** ladite étape de réalisation d'au moins une portion de référence (5) comprend les sous-étapes de: définir au moins une région creuse (5a) dans une première surface (2a) de la feuille de métal (2) et définir simultanément une région saillante (5b) sur une deuxième surface (2b) de la feuille de métal (2) opposée à la première surface (2a), ladite région saillante (5b) pouvant être insérée dans ladite région creuse (5a) de la portion de référence sur le bord opposé (4).

9. Procédé selon une quelconque des revendications 7 à 8, **caractérisé en ce que** ladite étape de création des moyens d'engagement (11) comprend une sous-étape de définition d'au moins un trou (16) sur ou près de chaque portion de référence (5), le trou (16) étant superposé à un trou correspondant (16) du bord longitudinal opposé lorsque le module est dans la condition engagée.

10. Procédé selon une quelconque des revendications précédentes, **caractérisé en ce que** il comprend en outre l'étape d'insertion d'au moins une autre feuille de métal en forme de spirale (2) dans un canal intérieur (8) d'une feuille de métal en forme de spirale (2), de sorte à définir une condition de transport et stockage d'une pluralité de modules (1).

11. Procédé selon une quelconque des revendications 7 à 9, **caractérisé en ce que** il comprend en outre une étape d'implémentation du module (1) ayant les sous-étape de:
- approcher les bords longitudinaux (4) l'un de l'autre de sorte à porter les portions de référence respectives (5) dans des positions correspondantes;
- engager les bords longitudinaux (4) l'un à l'autre; et
- optionnellement engager une extrémité du module à une extrémité successive d'un module adjacent de sorte à définir un canal allongé; les étapes d'engagement des bords latéraux (4) et/ou d'engagement des extrémités contribuant au retour du module dans une configuration tubulaire substantiellement circulaire.

12. Module de conduits pour des systèmes de distribution et/ou diffusion de l'air comprenant une feuille de métal (2) ayant une extension planaire substantiellement rectangulaire, **caractérisé en ce que** ladite feuille de métal (2), dans une condition non-opérationnelle de celle-ci, a une forme tubulaire ouverte et présente, en section transversale à l'axe du module, un développement en spirale afin de définir des bords longitudinaux opposés respectifs (4) comprenant des moyens d'engagement (11) et rangés à des distances différentes d'un axe de développement longitudinal (X) de la feuille de métal (2), le module ayant un accès longitudinal (17) dans une direction du canal intérieur (8), le module en particulier comprenant en outre au moins une et optionnellement deux butées latérales (6) s'étendant de bords respectifs (3) transversaux auxdits bords longitudinaux opposés (4), lesdites butées (6) saillant radialement dans une direction d'espacement de l'axe de développement (X).

13. Méthode d'emballage de modules selon la revendication 12, **caractérisée en ce que** ladite feuille de métal en forme de spirale (2) a un canal intérieur (8) apte à loger au moins une feuille de métal tubulaire en forme de spirale ouverte supplémentaire (8); lesdits bords longitudinaux opposés (4) de la feuille de métal étant déplacés l'un de l'autre pour permettre l'insertion/expulsion de l'au moins une feuille de métal supplémentaire (2).

14. Méthode pour implémenter un conduit selon la revendication 12, **caractérisée en ce que** elle comprend les étapes de:
- réunir les bords longitudinaux opposés respectifs (4) de chaque feuille de métal (2) d'une pluralité de feuilles de métal apte à définir un canal dans lequel les feuilles de métal (2) présentent un développement transversal substantiellement circulaire et fermé;
- déplacer les feuilles de métal (2), dans la configuration tubulaire fermée, en succession l'une près de l'autre afin de définir un canal d'un système de distribution de l'air (1); et
- engager le bord transversal (3) de chaque feuille de métal (2) au bord transversal (3) de la feuille de métal adjacente (2).
